# EUROPÄISCHE PATENTSCHRIFT

(11) **EP 2 826 666 B1**
(45) Veröffentlichungstag und Bekanntmachung des Hinweises auf die Patenterteilung: **31.05.2017**
(21) Anmeldenummer: 13189824.9
(22) Anmeldetag: 23.10.2013
(51) Int. Cl.: B60Q 1/076

(54) **Scheinwerfer für Fahrzeuge mit einer verschwenkbaren, optischen Baueinheit**
Headlamp for vehicles with a pivoting, optical assembly
Phare pour véhicule comprenant un composant optique pivotant

(30) Priorität: 31.10.2012 AT 504832012
(43) Veröffentlichungstag der Anmeldung: 21.01.2015
(73) Patentinhaber: ZKW Group GmbH, 3250 Wieselburg (AT)
(72) Erfinder: Mayer, Matthias, 3240 Mank (AT); Hungendorfer, Martin, 3642 Häusling (AT)
(74) Vertreter: Patentanwaltskanzlei Matschnig & Forsthuber OG

(56) Entgegenhaltungen:
- EP-A2- 1 452 798
- DE-A1- 10 120 217
- DE-A1-102007 009 852

## Beschreibung

Die Erfindung betrifft einen Scheinwerfer für Fahrzeuge mit einer optischen Baueinheit, welche optische Baueinheit um eine erste Achse schwenkbar an einem Lagerelement gelagert ist, welches Lagerelement eine zur ersten Achse beabstandete Stellvorrichtung trägt, welche ein translatorisch verstellbares und mit der optischen Baueinheit gekoppeltes Stellelement aufweist, und wobei zwischen der Stellvorrichtung und der optischen Baueinheit eine gelenkartige Verbindung besteht, und wobei die Stellvorrichtung um eine zweite Achse schwenkbar an dem Lagerelement gelagert ist und die zweite Achse parallel zur ersten Achse verläuft und an dem Lagerelement ein Lagerdom oder eine Lagerbohrung vorgesehen ist, an welchem bzw. an welcher die Stellvorrichtung mit einem korrespondierenden Lagerdom bzw. mit einer korrespondierenden Lagerbohrung schwenkbar um die zweite Achse gelagert ist, und die zweite Achse verstellbar ist, oder die zweite Achse verstellbar und zwischen unterschiedlichen Positionen parallel verschiebbar ist.

Ein solcher Scheinwerfer, bei dem eine Stellvorrichtung in Form eines Linearantriebes vorgesehen ist, ist aus der DE 101202 17 A1 bekannt. Durch die Umlenkung der Linearbewegung des Stellelementes des Linearantriebes in eine Verschwenkbewegung, also eine Drehbewegung der optischen Baueinheit in Form eines Lichtmoduls, kommt es bei einem Verschwenken der optischen Baueinheit zu einem Versatz der gelenkartigen Verbindung. Durch die verschwenkbare Lagerung der Stellvorrichtung um eine eigene Achse kann dieser Versatz ausgeglichen werden.

Die DE 102007009852 A1 beschreibt einen verstellbaren Scheinwerfer, in dem die Leuchtrichtung des Scheinwerfers durch eine Linearführung gedreht wird. Eine Gewindespindel initiiert aus der Drehbewegung des Stellmotors eine Linearbewegung eines auf der Gewindespindel befindlichen Führungsblocks, der wiederum über einen Hebelmechanismus den Scheinwerfer um dessen optische Achse dreht.

Bei der aus EP 1 452 798 A2 bekannten, gattungsgemäßen Stelleinrichtung mit Linearantrieb zum Schwenken einer Scheinwerferkomponente ist der Linearmotor nicht fest, sondern sozusagen schwimmend verbaut, um die Drehbewegung der Scheinwerferkomponente zu bewirken.

Es ist eine Aufgabe der Erfindung, einen solchen Scheinwerfer dahingehend zu verbessern, dass er einfach zusammenbaubar ist und eine stabile Konstruktion aufweist.

Diese Aufgabe wird mit einem eingangs erwähnten Scheinwerfer dadurch gelöst, dass erfindungsgemäß auf dem Lagerdom eine Exzenterhülse angeordnet, vorzugsweise aufgeschoben ist, wobei die Exzenterhülse einen an die Mantelfläche des Lagerdoms (8) angepassten Innenmantel sowie einen zu einer Innenmantelachse, welche in auf dem Lagerdom angeordneten, vorzugsweise aufgeschobenen Zustand mit der Achse des Lagerdoms zusammenfällt, zumindest bereichsweise exzentrisch ausgebildete Außenmantel aufweist, wobei der bereichsweise exzentrisch ausgebildete Außenmantel in Schnitten normal auf die Achse des Innenmantels der Exzenterhülse kreisförmig ausgebildet ist.

Die Exzenterhülse ist durch ihre oben beschriebene Ausgestaltung auf dem Lagerdom um die Achse drehbar gelagert, sodass je nach eingenommener Drehposition der Exzenterhülse in Bezug auf den Lagerdom der exzentrische Abschnitt anders ausgerichtet und somit die Achse, um welche sich die Lagerbohrung schlussendlich an der Exzenterhülse dreht, anders positioniert ist.

Durch das einfache Lagern der Stellvorrichtung mittels Lagerdoms und mit diesem zusammenwirkender Lagerbohrung, die auf den Lagerdom aufgeschoben wird, lässt sich die Stellvorrichtung einfach an dem Lagerelement aufschieben und ist dort stabil gelagert.

Mit der Erfindung wird eine deutlich einfachere Montage des Scheinwerfers bzw. eines Lichtmoduls als Teil des Scheinwerfers möglich. Auch die Möglichkeit für einen einfachen Austausch der Stellvorrichtung bei Defekt oder anderen Problemen ist gegeben, während bei einem Scheinwerfer nach dem bekannten Stand der Technik das gesamte Lichtmodul ausgetauscht werden muss.

Durch die Lagerung auf einem Lagerdom mittels einer Lagerbohrung ist die Lagerung auf deutlich robuster als im Stand der Technik bekannt. Somit stellen auch Einwirkungen von Außen, wie beispielsweise Erschütterungen oder Vibrationen im Fahrbetrieb kein Problem dar.

Somit ist bei der vorliegenden Erfindung im Gegensatz zum Stand der Technik die Möglichkeit gegeben, auch schwerere optische Baueinheiten, etwa größere bzw. schwerere Linsen zu schwenken.

Zusätzlich sind bei der vorliegenden Erfindung auch keine Probleme durch Abnützungen oder dergleichen zu erwarten. Ein Kurvenlichtantrieb kann phasenweise annähernd ohne Pause im Betrieb sein, sodass bei filigranen Ausführungen Defekte wie aus dem Stand der Technik bekannt nach einer gewissen Betriebsdauer nicht auszuschließen sind, die beispielsweise zu Fehlstellungen der optischen Baueinheit können, die im Extremfall zu Unfällen führen können.

Bei einer konkreten, stabilen und einfach zu fertigenden Ausführungsform der Erfindung ist vorgesehen, dass der Lagerdom an dem Lagerelement angebracht und die Lagerbohrung mit der Stellvorrichtung verbunden ist.

Vorzugsweise ist dabei vorgesehen, dass der Lagerdom einstückig mit dem Lagerelement ausgebildet ist.

Dies ist fertigungstechnisch von Vorteil und liefert eine stabile Verbindung zwischen Lagerdom und Lagerelement.

Fertigungstechnisch von Vorteil ist es, wenn die Lagerbohrung an einem Halter für die Stellvorrichtung angebracht, vorzugsweise mit dem Halter einstückig ausgebildet ist.

In diesem Halter ist die Stellvorrichtung angeordnet und über den Halter schwenkbar an dem Lagerelement gelagert.

Bei einer konkreten Ausführungsform der Erfindung ist weiters vorgesehen, dass der Lagerdom als gerader Kreiszylinder oder als, sich vorzugsweise vom Lagerelement weg gerichtet verjüngender, gerader Kreiskegelstumpf ausgebildet ist.

Die Ausführungsform des Lagerdoms in Form eines Kegelstumpfes und der entsprechend angepassten Lagerbohrung hat dabei fertigungstechnische Vorteile. Bei einer zylindrischen Ausführung des Werkstückes können beim Abziehen des Werkzeuges vom Werkstück (welches noch nicht ganz ausgehärtet ist) unerwünschte Verformungen auftreten, daher wird das Werkstück vorzugsweise kegelförmig bzw. kegelstumpfförmig ausgeführt, um an allen Stellen des Kegelmantels das Werkzeug gleichzeitig abzuheben, sodass Verformungen vermieden werden können.

Damit die Stellvorrichtung in Richtung der Längserstreckung des Lagerdoms gegen unerwünschtes Verschieben gesichert ist, ist weiters vorgesehen, dass der Stellvorrichtung zumindest ein Halteelement zugeordnet ist, welches in zumindest eine Halteführung, welche an dem Lagerelement vorgesehen ist, einschwenkbar ist, so dass in eingeschwenkter Position der Stellvorrichtung die Stellvorrichtung gegen ein Verschieben entlang der zweiten Achse gesichert ist.

Bei einem Zusammenbau des Scheinwerfers wird die Stellvorrichtung mit ihrer Lagerbohrung, die vorzugsweise auf einem Halter für die Stellvorrichtung ausgebildet ist, auf den Lagerdom aufgesetzt und beim Aufschieben werden die Halteelemente, in die Halteführungen hinein gedreht. In dieser Position ist die Stellvorrichtung bzw. genauer gesprochen ihr Halter gegen ein Verschieben in Richtung der zweiten Achse gesichert.

Prinzipiell sind ein Halteelement und eine zugeordnete Halteführung ausreichend, vorzugsweise sind aber mehrere insbesondere genau zwei Halteelemente und zwei zugeordnete Halteführungen vorgesehen, wodurch sich eine stabile Sicherung in Richtung der zweiten Achse ergibt.

Fertigungstechnisch und hinsichtlich der Stabilität ist es wieder von Vorteil, wenn das zumindest eine Halteelement an dem Halter für die Stellvorrichtung angeordnet, vorzugsweise mit diesem Halter einstückig ausgebildet ist.

Bei einer konkreten Ausführungsform ist vorgesehen, dass die zumindest eine Halteführung mittels zumindest einer an dem Lagerelement angeformten, vorzugsweise mit diesem Lagerelement einstückig ausgebildeten Haltelasche, gebildet ist.

Weiters ist mit Vorteil vorgesehen, dass zumindest ein Rückstellelement, beispielsweise eine Feder, etwa eine Druckfeder, vorgesehen ist, welche die Stellvorrichtung gegen ein Herausschwenken aus der eingeschwenkten Position, in welcher die Stellvorrichtung gegen ein Verschieben in Richtung der zweiten Achse gesichert ist, sichert.

Dieses zumindest eine Rückstellelement hält die Stellvorrichtung bzw. ihren Halter, nach dem dieser beim Zusammenbau in seine "Arbeitsposition" eingeschwenkt wurde, in seiner Position, Halter bzw. Stellvorrichtung sind somit gegen ein Ausschwenken gesichert.

Das zumindest eine Rückstellelement ist in Hinblick auf seine Rückstellkraft dabei derart ausgeführt, dass die (relativ geringe) Verdrehung der Stellvorrichtung um ihre Achse nicht beeinträchtigt wird.

Dabei ist das zumindest eine Rückstellelement insofern zusätzlich noch von Vorteil, da es zu einer Dämpfung der Verschwenkbewegung und somit zu einer flüssigen Verschwenkung der Stellvorrichtung führt.

Wiederum ist es von Vorteil, wenn das Rückstellelement an dem Lagerelement angeordnet, vorzugsweise mit diesem einstückig ausgebildet ist.

Bei einer einfachen Ausführungsform der Erfindung ist vorgesehen, dass die zweite Schwenkachse - für die Stellvorrichtung - durch die Achse des Lagerdoms bzw. der Lagerbohrung festgelegt ist.

In diesem Fall ist der Innenmantel der Lagerbohrung an die Form der Mantelfläche des Lagerdomes angepasst, sodass sich diese relativ zueinander verdrehen können, ein Verschieben in Richtungen normal zu der Achse des Lagerdoms aber verhindert ist.

Weiters ist vorgesehen, dass die Lagerbohrung einen Innenmantel aufweist, welcher an den zumindest bereichsweise exzentrisch verlaufenden Außenmantel des Lagerdoms der Exzenterhülse angepasst ist, so dass die Stellvorrichtung bzw. der Halter für die Stellvorrichtung an dem Außenmantel der Exzenterhülse verschwenkbar gelagert ist.

Ohne diese Exzenterhülse fallen die Achse des Lagerdomes, der als gerader Kreiskegelstumpf oder als gerader Zylinder ausgebildet ist, und die zweite Achse für die Stellvorrichtung zusammen, wie dies bei einer einfachen Ausführungsform der Erfindung weiter oben beschrieben ist.

Durch die Exzenterhülse dreht sich nun die Lagerbohrung um den bzw. an dem kreisförmigen Außenmantel der Exzenterhülse; nachdem dieser exzentrisch zu der Achse des Lagerdoms verläuft, verläuft je nach Verdrehposition der Exzenterhülse die zweite Achse an unterschiedlicher Position, da die zweite Achse durch die Achse des (in Schnitten auf seine Achse kreisförmigen) Außenmantels der Exzenterhülse gebildet wird.

Zum fixen Einstellen der Lage der zweiten Achse ist weiters vorgesehen, dass die Exzenterhülse an dem Lagerdom mit einem Befestigungsmittel, vorzugsweise einer Befestigungsschraube fixierbar ist.

Vorzugsweise, um die Exzenterhülse und somit die zweite Achse stabil in ihrer Position fixieren zu können, ist vorgesehen, dass die Exzenterhülse und der Lagerdom an einander zugewandten Kontaktflächen eine korrespondierende Rasterung, etwa Verzahnung aufweisen.

Die Anzahl der möglichen Positionen der Exzenterhülse ist entsprechend durch die Feinheit der Rasterung limitiert.

Weiters ist vorzugsweise vorgesehen, dass die gelenkartige Verbindung in Form eines Kugelgelenks ausgebildet ist.

Grundsätzlich reicht es aus, wenn die gelenkartige Verbindung eine Bewegung in einer Ebene normal auf die Achse der optischen Baueinheit bzw. normal auf die Achse für die Stellvorrichtung zulässt. Um allerdings Toleranzen ausgleichen zu können, beispielsweise auch eine nicht völlige Parallelität der beiden Achsen, ist ein Kugelgelenk von Vorteil.

Besonders vorteilhaft ist die Ausgestaltung der gelenkartige Verbindung in Form eines Kugelgelenks auch deshalb, weil dadurch der Zusammenbau des Scheinwerfers bzw. Lichtmoduls deutlich vereinfacht wird, wie dies weiter unten noch genauer beschrieben wird.

Insbesondere ist dabei vorgesehen, dass ein erster Teil der gelenkartigen Verbindung mit dem Stellelement verbunden ist und ein zweiter Teil der gelenkartigen Verbindung mit der optischen Baueinheit in Verbindung steht, und dass die beiden Teile der gelenkartigen Verbindung vorzugsweise lösbar miteinander verbunden sind.

Bei einer konkreten Ausführungsform der Erfindung ist der zweite Teil der gelenkartigen Verbindung an einem Ende eines Umlenkhebels ausgebildet ist, welcher Umlenkhebel an seinem anderen Ende verdrehfest mit der optischen Baueinheit verbunden ist.

Dadurch wird es möglich, den erfindungsgemäßen Scheinwerfer einfach zusammen zu bauen.

Bei einer Ausführungsform der Erfindung ist die optische Baueinheit eine verschwenkbare Linse, vorzugsweise die verschwenkbare Linse eines Lichtmodules, etwa eines Projektionsmoduls.

Bei einer einfach zu fertigen Ausführungsform des Scheinwerfers ist außerdem vorgesehen, dass das Lagerelement als Teil eines Träger oder als Träger für das Projektionsmodul ausgebildet ist, und wobei die Linse als Bestandteil des Projektionsmoduls um die erste Achse an dem Lagerelement verschwenkbar gelagert ist.

Es kann auch vorgesehen sein, dass die optische Baueinheit ein Projektionsmodul ist, das aus einem Reflektor, einer Linse und vorzugsweise einer zwischen Linse und Reflektor angeordneten Blende besteht.

Ebenso kann vorgesehen sein, dass die optische Baueinheit ein, beispielsweise schalenförmiger, Reflektor ist.

Bei einer konkreten Ausführungsform der Erfindung ist vorgesehen, dass die erste und zweite Achse in Anbaulage der optischen Baueinheit vertikal verlaufen, und die Stellvorrichtung beispielsweise zum Schwenken der optischen Baueinheit für Kurvenlicht dient.

Bei einer anderen Ausführungsform ist vorgesehen, dass die erste und zweite Achse in Anbaulage des Lichtmoduls horizontal verlaufen und die Stellvorrichtung beispielsweise zur Leuchtweiteregelung der optischen Baueinheit dient.

Im Folgenden ist die Erfindung an Hand eines in der Zeichnung dargestellten Ausführungsbeispiels näher erörtert. Es zeigt
Fig.1 eine Ansicht eines Lichtmoduls als Bestandteil eines erfindungsgemäßen Fahrzeugscheinwerfers,
Fig. 2 einen Schnitt entlang der Linie A-A in Figur 1,
Fig. 3 eine Ansicht des Lichtmoduls aus Figur 1 in einer Ansicht von hinten in einer Explosionsdarstellung,
Fig. 3a - 3c Schnitte entlang der Linie C-C, mit unterschiedlichen Positionen der Exzenterhülse,
Fig. 4 einen Schnitt entlang der Linie B-B in Figur 1,
Fig. 5 eine perspektivische Ansicht des Lichtmoduls aus Figur 1 mit aufgesetzter Stellvorrichtung vor dem Einschwenken in ihre Arbeitsposition,
Fig. 6 das Lichtmodul aus Figur 5 mit der Stellvorrichtung in eingeschwenkter Arbeitsposition,
Fig. 7 eine perspektivische Ansicht eines Teiles Lichtmoduls im Bereich des Lagerdoms und der Exzenterhülse, und
Fig. 8 eine perspektivische Ansicht eines Teiles des Lichtmoduls in Hinblick auf ein Detail in der Verbindung zwischen Exzenterhülse und Lagerdom.

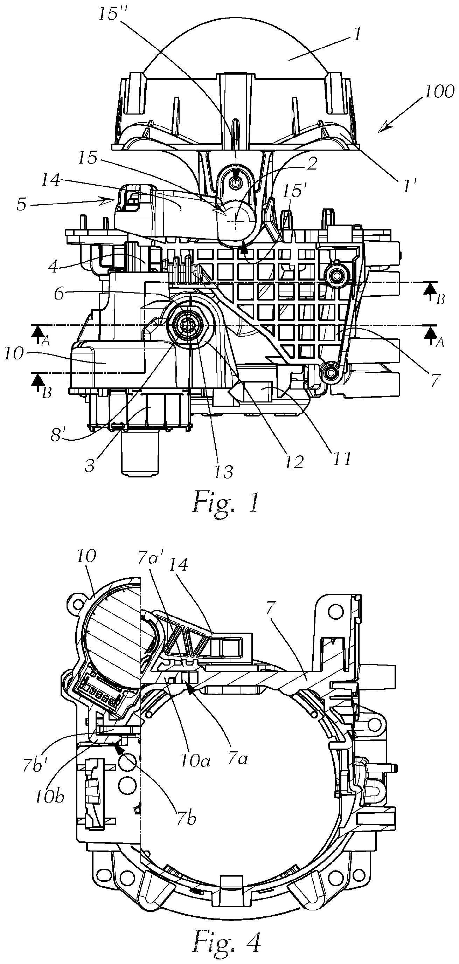

Figur 1 zeigt ein Lichtmodul 100 für einen Fahrzeugscheinwerfer. Das Lichtmodul 100 ist beispielsweise als Projektionsmodul ausgebildet, das aus einem nicht dargestellten Reflektor, einer optischen Baueinheit in Form einer Linse 1 und beispielsweise zusätzlich noch einer zwischen Linse 1 und Reflektor angeordneten, nicht dargestellten Blende besteht.

Die optische Baueinheit in Form einer Linse 1 ist um eine erste Achse 2 schwenkbar an einem Lagerelement 7 gelagert ist, welches Lagerelement 7 eine zur ersten Achse 2 beabstandete Stellvorrichtung 3 trägt, welche ein translatorisch verstellbares und mit der Linse 1 gekoppeltes Stellelement 4 aufweist. Bei der Stellvorrichtung 3 handelt es sich um einen Linearsteller, beispielsweise einen Linearantrieb, etwa einen Linearmotor.

Zwischen der Stellvorrichtung 3 und der Linse 1 besteht eine gelenkartige Verbindung 5, und die Stellvorrichtung 3 ist um eine zweite Achse 6 schwenkbar an dem Lagerelement 7 gelagert. Die zweite Achse 6 verläuft parallel zur ersten Achse 2. Weiters verlaufen in dem gezeigten Beispiel die erste und zweite Achse 2, 6 in Anbaulage der Linse 1 vertikal, die Stellvorrichtung 3 dient somit beispielsweise zum Schwenken der optischen Baueinheit 1 für Kurvenlicht.

Das Lagerelement 7 ist bei der gezeigten Ausführungsform als Teil eines Trägers für das Projektionsmodul 100, und zwar einstückig mit dem Träger ausgebildet. Die Linse 1 als Bestandteil des Projektionsmoduls 100 ist um die erste Achse 2 an dem Lagerelement 7 und somit an dem Träger verschwenkbar gelagert.

Die Linse 1 ist dabei von einem Linsenhalter 1' gehalten, welcher Linsenhalter 1' um die Achse 2 an dem Lagerelement 7 verschwenkbar gelagert ist.

Die gelenkartige Verbindung 5 ist vorzugsweise in Form eines Kugelgelenks ausgebildet ist. Ein erster Teil der gelenkartigen Verbindung 5 ist dabei mit dem Stellelement 4 verbunden (bzw. ein Teil von diesem, etwa einstückig mit dem Stellelement 4 verbunden), und ein zweiter Teil der gelenkartigen Verbindung 5 steht mit dem Linsenhalter 1' in Verbindung, wobei die beiden Teile der gelenkartigen Verbindung 5 vorzugsweise lösbar miteinander verbunden sind.

Bei der gezeigten konkreten Ausführungsform ist vorgesehen, dass der zweite Teil der gelenkartigen Verbindung 5 an einem Ende eines Umlenkhebels 14 ausgebildet ist, welcher Umlenkhebel 14 an seinem anderem Ende 15 verdrehfest mit dem Linsenhalter 1' verbunden ist.

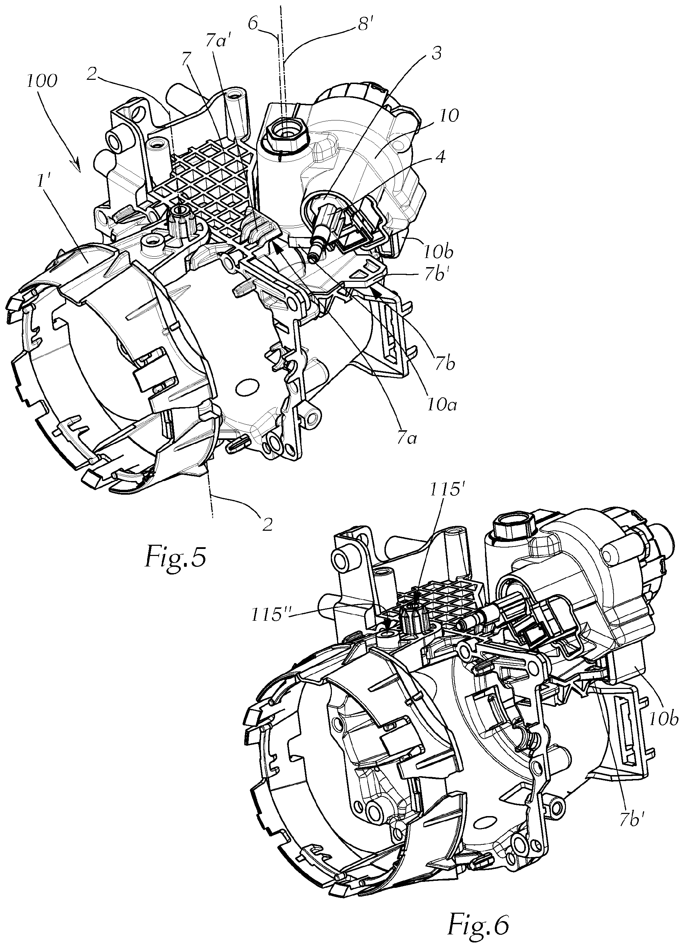

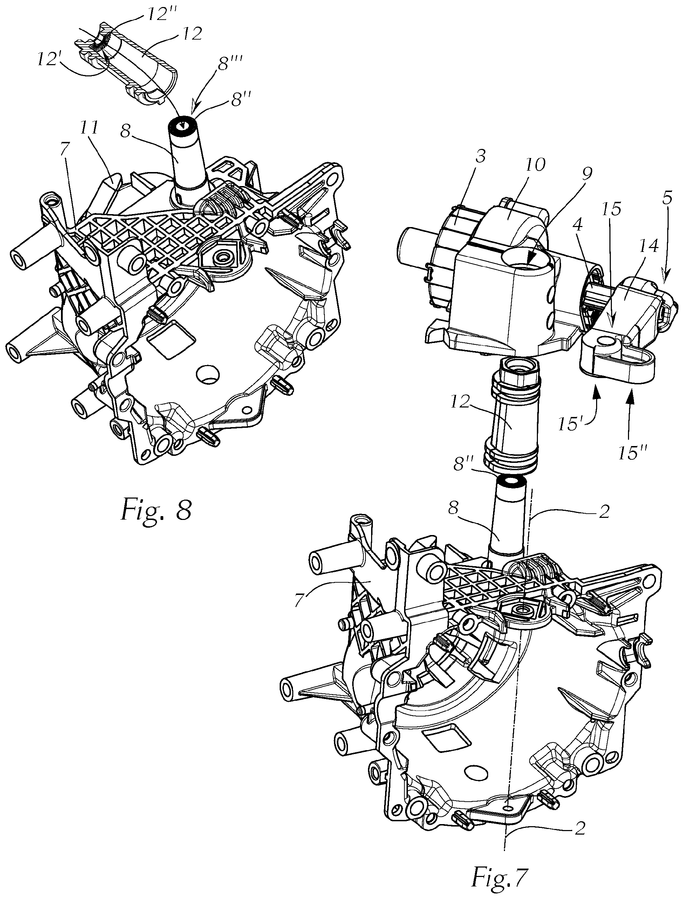

Besonders vorteilhaft ist die Ausgestaltung der gelenkartige Verbindung in Form eines Kugelgelenks 5 auch deshalb, weil dadurch der Zusammenbau des Scheinwerfers bzw. Lichtmoduls deutlich vereinfacht wird. Betrachtet man etwa Figur 7, so erkennt man, dass durch die Ausgestaltung der Verbindung als Kugelgelenk 5 der Hebelarm 14 auch um eine Achse entlang der Längserstreckung des Stellelementes 4 geschwenkt werden kann. Der Hebelarm 14 kann also von oben herab nach unten geschwenkt und mit seinem Endbereich 15, konkret mit seiner Verbindungsstelle 15' auf eine korrespondierende Verbindungsstelle 115' an dem Linsenhalter 1' aufgesetzt werden, siehe Figur 6. Über eine Bohrung 15" wird der Hebel 14 schließlich mit dem Linsenhalter, der dazu eine entsprechende Bohrung 115" aufweist, verschraubt, sodass Linsenhalter 1' und der Endbereich 15 des Hebels 14 drehfest miteinander verbunden sind.

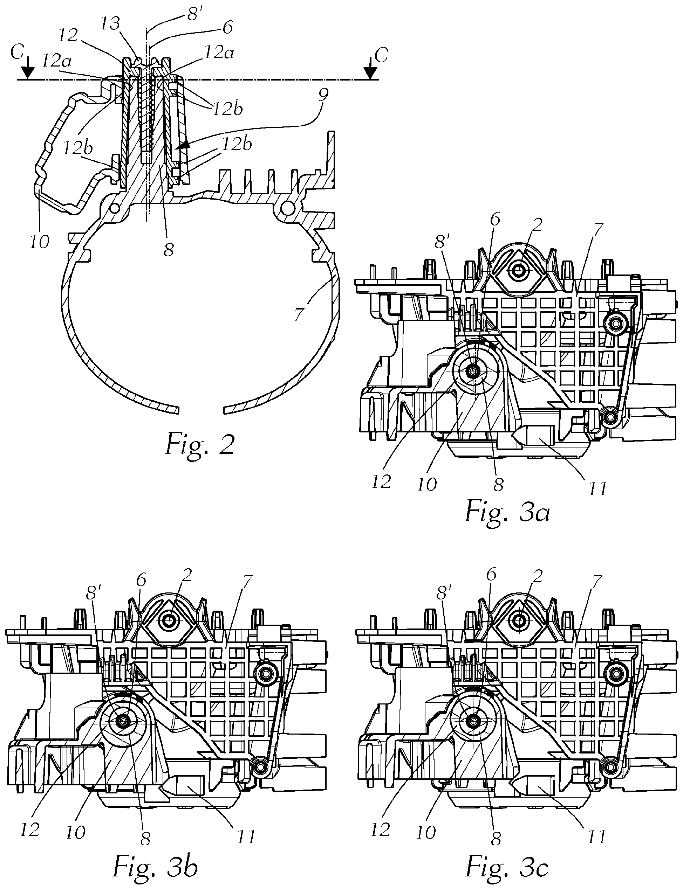

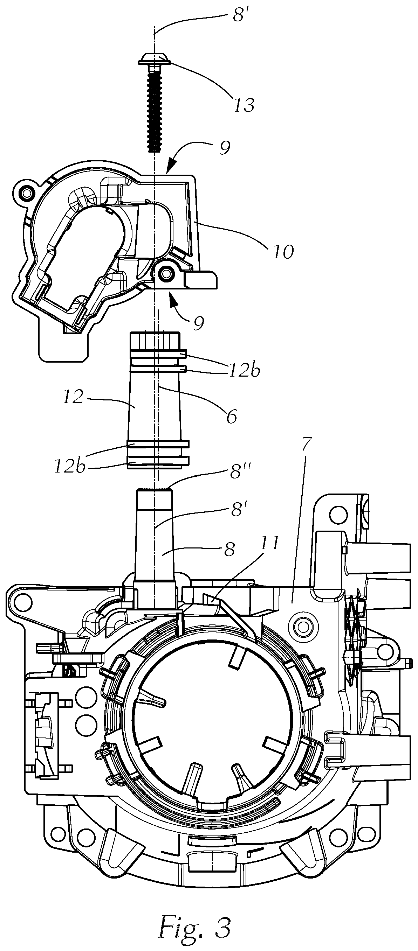

Weiters ist vorgesehen, dass wie in Figur 2 und 3 gut zu erkennen an dem Lagerelement 7 ein Lagerdom 8 vorgesehen ist, an welchem die Stellvorrichtung 3 mit einer korrespondierenden Lagerbohrung 9 schwenkbar um die zweite Achse 6 gelagert ist.

Durch das einfache Lagern der Stellvorrichtung 3 mittels Lagerdoms 8 und mit diesem zusammenwirkender Lagerbohrung 9, die auf den Lagerdom 8 aufgeschoben wird, lässt sich die Stellvorrichtung 3 einfach an dem Lagerelement 7 aufschieben und ist dort stabil gelagert.

Der Lagerdom 8 ist wie gezeigt vorzugsweise einstückig mit dem Lagerelement 7 ausgebildet. Dies ist fertigungstechnisch von Vorteil und liefert eine stabile Verbindung zwischen Lagerdom und Lagerelement.

Bei dem als Lagerdom 8 bezeichneten Element handelt es sich dabei im Wesentlichen um ein von dem Lagerelement 7 abstehendes Bauteil mit gewissen, im weiteren Text beschriebenen Eigenschaften.

Die Stellvorrichtung 3 weist dabei nicht direkt, unmittelbar selbst die Lagerbohrung 9 auf, sondern es ist ein Halter 10 für die Stellvorrichtung 3 vorgesehen, in welchem letztere gehalten ist. Dieser Halter 10 weist die genannte Lagerbohrung 9 auf, mittels welcher der Halter 10 auf den Lagerdom 8 aufgeschoben werden kann, sodass der Halter 10 und somit auch die von ihm gehaltene Stellvorrichtung 3 an dem Lagerdom 8 schwenkbar gelagert sind.

Von Vorteil ist es, wenn wie dargestellt die Lagerbohrung 9 an dem Halter 10 für die Stellvorrichtung 3 einstückig ausgeformt ist.

Der Lagerdom 8 ist, wie dies Figur 2 und 3, aber auch den Figuren 7 und 8 gut zu entnehmen ist, als sich vorzugsweise vom Lagerelement 7 weg gerichtet verjüngender, gerader Kreiskegel(stumpf) ausgebildet.

Die Ausführungsform des Lagerdoms in Form eines Kreiskegels bzw. -stumpfes und der entsprechend angepassten Lagerbohrung hat unter dabei unter anderem fertigungstechnische Vorteile. Bei einer zylindrischen Ausführung des Werkstückes können beim Abziehen des Werkzeuges vom Werkstück (welches noch nicht ganz ausgehärtet ist) unerwünschte Verformungen auftreten, daher wird das Werkstück vorzugsweise kegelförmig bzw. kegelstumpfförmig ausgeführt, um an allen Stellen des Kegelmantels das Werkzeug gleichzeitig abzuheben, sodass Verformungen vermieden werden können.

Ein weiterer Vorteil dieser Ausführungsform besteht darin, dass dadurch das Aufstecken vereinfacht wird da, beim Aufsteckvorgang der Innenmantel in Form eines Kegels der Lagerbohrung erst in vollständig aufgeschobenem Zustand passgenau auf dem Kegelmantel des Lagerdoms aufliegt. Bei einer zylinderförmigen Ausführungsform hingegen liegen die beiden Mäntel praktisch während des gesamten Aufschiebens aneinander an, wodurch der Aufsteckvorgang unter Umständen weniger einfach vonstatten geht.

Die Gerade durch den Mittelpunkt des Grundkreises des Zylinders bzw. des Kreiskegels wird der bekannten Terminologie folgend als Achse 8' des Zylinders bzw. des Kreiskegels bezeichnet, siehe z.B. Figur 2 oder Figur 3.

Bei einer einfachen, nicht dargestellten Ausführungsform der Erfindung ist vorgesehen, dass die zweite Schwenkachse für die Stellvorrichtung durch die Achse des Lagerdoms bzw. der Lagerbohrung 9 (deren Achse in diesem Fall mit jener der Lagerdoms zusammenfällt) festgelegt ist.

In diesem Fall ist der Innenmantel der Lagerbohrung an die Form der Mantelfläche des Lagerdomes angepasst, sodass sich diese relativ zueinander verdrehen können, ein Verschieben in Richtungen normal zu der Achse des Lagerdoms aber verhindert ist.

Bei einer besonders vorteilhaften, in den Figuren dargestellten Ausführungsform der Erfindung ist hingegen vorgesehen, dass die zweite Achse 6 verstellbar ist.

Bei einem vorgestellten Scheinwerfer sind Lager, Gelenke und zumindest ein Umlenkhebel notwendig. Entsprechend summieren sich die Bauteiltoleranzen, sodass häufig die optimale Lage Achse nicht mit der Längsachse des fixen Lagerdoms übereinstimmt. Daher ist es von Vorteil, die Achse 6 für die Stellvorrichtung 6 verstellbar, nämlich vorzugsweise parallel zu der Achse 6 verstellbar zu machen.

Entsprechend ist vorgesehen, dass vorzugsweise die zweite Achse 6 zwischen unterschiedlichen Positionen parallel verschiebbar ist. Die Figuren 3a - 3c zeigen drei beispielhafte, unterschiedliche Positionen der Achse 6, um welche der Halter 10 mit seiner Lagerbohrung 9 drehbar gelagert ist, während die Achse 8' des Lagerdoms in allen drei Figuren fix in Bezug auf das Lagerelement 7 ist.

Um eine solche Einstellbarkeit der Achse 6 zu erlauben, ist bei der gezeigten Ausführungsform vorgesehen, dass auf dem Lagerdom 8 eine Exzenterhülse 12 anordenbar, vorzugsweise aufschiebbar ist, wobei die Exzenterhülse 12 einen an die Mantelfläche des Lagerdoms 8 angepassten Innenmantel 12a sowie einen zu einer Innenmantelachse, welche in auf dem Lagerdom 8 angeordneten, vorzugsweise aufgeschobenen Zustand mit der Achse 8' des Lagerdoms 8 zusammenfällt, zumindest bereichsweise exzentrisch ausgebildete Außenmantel 12b aufweist, wobei der bereichsweise exzentrisch ausgebildete Außenmantel 12b in Schnitten normal auf die Achse des Innenmantels der Exzenterhülse 12 kreisförmig ausgebildet ist.

Die Exzenterhülse 12 ist durch ihre oben beschriebene Ausgestaltung auf dem Lagerdom um die Achse 8' drehbar gelagert, sodass je nach eingenommener Drehposition der Exzenterhülse 12 in Bezug auf den Lagerdom 8 der exzentrische Abschnitt 12b anders ausgerichtet und somit die Achse 6, um welche sich die Lagerbohrung 9 schlussendlich an der Exzenterhülse 12 dreht, anders positioniert ist.

Figur 2 zeigt die auf den Lagerdome 8 aufgeschobene Exzenterhülse 12 und den auf der Exzenterhülse 12 drehbar gelagerten Halter 10. Figur 3 zeigt Lagerdom 8, Exzenterhülse 12 Halter 10 mit Lagerbohrung 9 und Fixierschraube 13 in auseinander gezogenem Zustand.

Die Lagerbohrung 9 weist einen Innenmantel auf, welcher an den zumindest bereichsweise exzentrisch verlaufenden Außenmantel 12b des Lagerdoms der Exzenterhülse 12 angepasst ist, so dass die Stellvorrichtung 3 bzw. der Halter 10 für die Stellvorrichtung 3 an dem Außenmantel 12b der Exzenterhülse 12 verschwenkbar gelagert ist. Die Lagerbohrung 9 ist somit nicht direkt auf dem Lagerdom 8 sondern an dem exzentrischen Bereich 12b der Exzenterhülse 12 drehbar gelagert.

Wie oben schon erwähnt, fallen ohne diese Exzenterhülse 12 die Achse 8' des Lagerdomes 8, der als gerader Kreiskegelstumpf ausgeführt ist, und die zweite Achse 6 für die Stellvorrichtung 3 zusammen, wie dies bei einer einfachen Ausführungsform der Erfindung weiter oben beschrieben ist.

Durch die Exzenterhülse 12 dreht sich nun die Lagerbohrung 9 um den bzw. an dem kreisförmigen Außenmantel 12b der Exzenterhülse 12; nachdem dieser exzentrisch zu der Achse 8' des Lagerdoms 8 verläuft, verläuft je nach Verdrehposition der Exzenterhülse die zweite Achse 6 an unterschiedlicher Position, da die zweite Achse 6 durch die Achse des (in Schnitten auf seine Achse kreisförmigen) Außenmantels 12b der Exzenterhülse 12 gebildet wird.

Zum fixen Einstellen der Lage der zweiten Achse 6 ist weiters vorgesehen, dass die Exzenterhülse 12 an dem Lagerdom 8)mit einem Befestigungsmittel, vorzugsweise einer Befestigungsschraube 13 fixierbar ist, siehe z.B. Figur 2 oder 3. Die Befestigungsschraube 13 verschraubt dabei die Exzenterhülse 12 in ihrer gewünschten Position mit dem Lagerdom 8. Vorzugsweise, um die Exzenterhülse 12 und somit die zweite Achse 6 besonders stabil in ihrer Position fixieren zu können, ist vorgesehen, dass die Exzenterhülse 12 und der Lagerdom 8 an einander zugewandten Kontaktflächen 12', 8"' eine korrespondierende Rasterung, etwa Verzahnung 12", 8" aufweisen, siehe Figur 8.

Die Anzahl der möglichen Positionen der Exzenterhülse ist entsprechend durch die Feinheit der Rasterung limitiert.

Wie z.B. in Figuren 1 sowie 5 - 7 gut zu erkennen ist, kann die Exzenterhülse 12 an ihrem oberen Ende beispielsweise als Sechskant ausgebildet sein. Durch Drehung an Sechskant, der also den Kopf der Exzenterhülse bildet, kann aufgrund der Exzentrizität der Lagerhülse der Halter 10 der Stellvorrichtung 3 in einer X-Y-Ebene, welche normal auf die Achse des Lagerdoms steht, verstellt werden. Entsprechend verfügt vorzugsweise die oben erwähnte eine Halteführung ein (geringes) Spiel auf, um diese Bewegung in der X-Y-Ebene zu ermöglichen.

Typischerweise wird dabei die Exzenterhülse 12 in ihre gewünschte Position mit bereits aufgesetztem Halter 10 über den Sechskant gedreht und dann, bereits mit aufgesetztem Halter 10 über die Schraube 13 fixiert.

Es kann somit mittels der Exzenterhülse 12 die Lage des Halters 10 und somit die Lage der Stellvorrichtung 3, also quasi eine Nullpunkt-Einstellung der Stellvorrichtung 3 vorgenommen und damit eine Grundeinstellung z.B. für das Kurvenlicht oder die Leuchtweitenregulierung geschaffen werden.

Damit die Stellvorrichtung 3 in Richtung der Längserstreckung des Lagerdoms 8 gegen unerwünschtes Verschieben auf der Exzenterhülse 12 gesichert ist, ist weiters vorgesehen, dass der Halter 10 der Stellvorrichtung 3 zwei Halteelemente 10a, 10b aufweist (siehe Figur 4), welche an dem Halter 10 einstückig angeformt sind, und welche in Halteführungen 7a, 7b an dem Lagerelement 7 einschwenkbar sind, so dass in eingeschwenkter Position der Halter 10 gegen ein Verschieben entlang der zweiten Achse 6 gesichert ist.

Bei einem Zusammenbau des Scheinwerfers wird dabei, nachdem wie in Figur 7 angedeutet die Exzenterhülse 12 auf den Lagerdom 8 aufgeschoben, der Halter 10 auf die Exzenterhülse 12 aufgeschoben (Figur 5), und aus dieser ausgeschwenkten Position wird der Halter 10 in eine eingeschwenkte Position auf der Exzenterhülse 12 gedreht (Figur 6). Dadurch gelangen die Halteelemente 10a, 10b in die Führungen 7a, 7b. In dieser Position ist die Stellvorrichtung 3 bzw. genauer gesprochen ihr Halter 10 gegen ein Verschieben in Richtung der zweiten Achse 6 gesichert. Abschließend erfolgt eine Einstellung der Grundposition, indem die Exzenterhülse in die gewünschte Position verdreht und in dieser fixiert wird.

Wie in Figur 4 gut zu erkennen, sind die Halteführungen 7a, 7b mittels an dem Lagerelement 7 angeformter, vorzugsweise mit diesem Lagerelement 7 einstückig ausgebildeter Haltelaschen 7a', 7b', gebildet.

Außerdem ist es noch von Vorteil wenn ein Rückstellelement 11, beispielsweise eine Feder, etwa eine Druckfeder, vorgesehen ist (siehe z.B. Figuren 1, 3, 8), welche den Halter 10 für die Stellvorrichtung 3 gegen ein Herausschwenken aus der eingeschwenkten Position, in welcher der Halter 10 gegen ein Verschieben in Richtung der zweiten Achse 6 gesichert ist, sichert.

Dieses Rückstellelement 11 hält den Halter 10, nach dem dieser beim Zusammenbau in seine "Arbeitsposition" eingeschwenkt wurde, in seiner Position, Halter 10 bzw. Stellvorrichtung 3 sind somit gegen ein Ausschwenken gesichert.

Das Rückstellelement 11 ist in Hinblick auf seine Rückstellkraft dabei derart ausgeführt, dass die (relativ geringe) Verdrehung des Halters 10 um seine Achse 6 nicht beeinträchtigt wird.

Dabei ist das Rückstellelement 11 insofern zusätzlich noch von Vorteil, da es zu einer Dämpfung der Verschwenkbewegung und somit zu einer flüssigen Verschwenkung der Stellvorrichtung 3 führt.

Das Rückstellelement 11 ist vorzugsweise wie dargestellt an dem Lagerelement 7 angeordnet und mit diesem einstückig ausgebildet.

## Patentansprüche

1. Scheinwerfer für Fahrzeuge mit einer optischen Baueinheit (1), welche optische Baueinheit (1) um eine erste Achse (2) schwenkbar an einem Lagerelement (7) gelagert ist, welches Lagerelement (7) eine zur ersten Achse (2) beabstandete Stellvorrichtung (3) trägt, welche ein translatorisch verstellbares und mit der optischen Baueinheit (1) gekoppeltes Stellelement (4) aufweist, und wobei zwischen der Stellvorrichtung (3) und der optischen Baueinheit (1) eine gelenkartige Verbindung (5) besteht, und wobei die Stellvorrichtung (3) um eine zweite Achse (6) schwenkbar an dem Lagerelement (7) gelagert ist und die zweite Achse (6) parallel zur ersten Achse (2) verläuft, wobei an dem Lagerelement (7) ein Lagerdom (8) oder eine Lagerbohrung vorgesehen ist, an welchem bzw. an welcher die Stellvorrichtung (3) mit einem korrespondierenden Lagerdom bzw. mit einer korrespondierenden Lagerbohrung (9) schwenkbar um die zweite Achse (6) gelagert ist,
**dadurch gekennzeichnet, dass**
die zweite Achse (6) verstellbar ist, oder die zweite Achse (6) verstellbar und zwischen unterschiedlichen Positionen parallel verschiebbar ist, und dass auf dem Lagerdom (8) eine Exzenterhülse (12) angeordnet, vorzugsweise aufgeschoben ist, wobei die Exzenterhülse (12) einen an die Mantelfläche des Lagerdoms (8) angepassten Innenmantel (12a) sowie einen zu einer Innenmantelachse, welche in auf dem Lagerdom (8) angeordneten, vorzugsweise aufgeschobenen Zustand mit der Achse (8') des Lagerdoms (8) zusammenfällt, zumindest bereichsweise exzentrisch ausgebildete Außenmantel (12b) aufweist, wobei der bereichsweise exzentrisch ausgebildete Außenmantel (12b) in Schnitten normal auf die Achse des Innenmantels der Exzenterhülse (12) kreisförmig ausgebildet ist.

2. Scheinwerfer nach Anspruch 1, **dadurch gekennzeichnet, dass** der Lagerdom (8) an dem Lagerelement (7) angebracht und die Lagerbohrung (9) mit der Stellvorrichtung (3) verbunden ist.

3. Scheinwerfer nach Anspruch 2, **dadurch gekennzeichnet, dass** der Lagerdom (8) einstückig mit dem Lagerelement (7) ausgebildet ist.

4. Scheinwerfer nach Anspruch 2 oder 3, **dadurch gekennzeichnet, dass** die Lagerbohrung (9) an einem Halter (10) für die Stellvorrichtung (3) angebracht, vorzugsweise mit dem Halter (10) einstückig ausgebildet ist.

5. Scheinwerfer nach einem der Ansprüche 1 bis 4, **dadurch gekennzeichnet, dass** der Lagerdom (8) als gerader Kreiszylinder oder als, sich vorzugsweise vom Lagerelement (7) weg gerichtet verjüngender, gerader Kreiskegelstumpf ausgebildet ist.

6. Scheinwerfer nach einem der Ansprüche 1 bis 5, **dadurch gekennzeichnet, dass** der Stellvorrichtung (3) zumindest ein Halteelement (10a, 10b) zugeordnet ist, welches in zumindest eine Halteführung (7a, 7b), welche an dem Lagerelement (7) vorgesehen ist, einschwenkbar ist, so dass in eingeschwenkter Position der Stellvorrichtung (3) die Stellvorrichtung (3) gegen ein Verschieben entlang der zweiten Achse (6) gesichert ist.

7. Scheinwerfer nach Anspruch 6, **dadurch gekennzeichnet, dass** das zumindest eine Halteelement (10a, 10b) an dem Halter (10) für die Stellvorrichtung (3) angeordnet, vorzugsweise mit diesem Halter (10) einstückig ausgebildet ist.

8. Scheinwerfer nach Anspruch 6 oder 7, **dadurch gekennzeichnet, dass** die zumindest eine Halteführung (7a, 7b) mittels zumindest einer an dem Lagerelement (7) angeformten, vorzugsweise mit diesem Lagerelement (7) einstückig ausgebildeten Haltelasche (7a', 7b'), gebildet ist.

9. Scheinwerfer nach einem der Ansprüche 6 bis 8, **dadurch gekennzeichnet, dass** zumindest ein Rückstellelement (11), beispielsweise eine Feder, etwa eine Druckfeder, vorgesehen ist, welche die Stellvorrichtung (3) gegen ein Herausschwenken aus der eingeschwenkten Position, in welcher die Stellvorrichtung (3) gegen ein Verschieben in Richtung der zweiten Achse (6) gesichert ist, sichert.

10. Scheinwerfer nach Anspruch 9, **dadurch gekennzeichnet, dass** das Rückstellelement (11) an dem Lagerelement (7) angeordnet, vorzugsweise mit diesem einstückig ausgebildet ist.

11. Scheinwerfer nach einem der Ansprüche 1 bis 10, **dadurch gekennzeichnet, dass** die zweite Schwenkachse (6) durch die Achse (8') des Lagerdoms (8) bzw. der Lagerbohrung (9) festgelegt ist.

12. Scheinwerfer nach einem der Ansprüche 1 bis 11, **dadurch gekennzeichnet, dass** die Lagerbohrung (9) einen Innenmantel aufweist, welcher an den zumindest bereichsweise exzentrisch verlaufenden Außenmantel (12b) des Lagerdoms der Exzenterhülse (12) angepasst ist, so dass die Stellvorrichtung (3) bzw. der Halter (10) für die Stellvorrichtung (3) an dem Außenmantel (12b) der Exzenterhülse (12) verschwenkbar gelagert ist.

13. Scheinwerfer nach einem der Ansprüche 1 bis 12**, dadurch gekennzeichnet, dass** die Exzenterhülse (12) an dem Lagerdom (8) mit einem Befestigungsmittel, vorzugsweise einer Befestigungsschraube (13) fixierbar ist.

14. Scheinwerfer nach Anspruch 13, **dadurch gekennzeichnet, dass** die Exzenterhülse (12) und der Lagerdom (8) an einander zugewandten Kontaktflächen (12', 8') eine korrespondierende Rasterung, etwa Verzahnung (12", 8"') aufweisen.

15. Scheinwerfer nach einem der Ansprüche 1 bis 14**, dadurch gekennzeichnet, dass** die gelenkartige Verbindung (5) in Form eines Kugelgelenks ausgebildet ist.

16. Scheinwerfer nach einem der Ansprüche 1 bis 15**, dadurch gekennzeichnet, dass** ein erster Teil der gelenkartigen Verbindung (5) mit dem Stellelement (4) verbunden ist und ein zweiter Teil der gelenkartigen Verbindung (5) mit der optischen Baueinheit (1) in Verbindung steht, und dass die beiden Teile der gelenkartigen Verbindung (5) vorzugsweise lösbar miteinander verbunden sind.

17. Scheinwerfer nach Anspruch 16, **dadurch gekennzeichnet, dass** der zweite Teil der gelenkartigen Verbindung (5) an einem Ende eines Umlenkhebels (14) ausgebildet ist, welcher Umlenkhebel (14) an seinem anderem Ende (15) verdrehfest mit der optischen Baueinheit (1) verbunden ist.

## Claims

1. A headlamp for vehicles, having an optical assembly (1), which optical assembly (1) is mounted on a bearing element (7) pivotably about a first axis (2), which bearing element (7) supports a setting device (3), which is distanced from the first axis (2) and which has a setting element (4) movable in translation and coupled to the optical assembly (1), and wherein a jointed connection (5) exists between the setting device (3) and the optical assembly (1), and wherein the setting device (3) is mounted on the bearing element (7) pivotably about a second axis (6) and the second axis (6) runs parallel to the first axis (2), wherein a bearing dome (8) or a bearing bore is provided on the bearing element (7), at which bearing dome or at which bearing bore the setting device (3) is mounted with a corresponding bearing dome or with a corresponding bearing bore (9), pivotably about the second axis (6),
**characterised in that**
the second axis (6) is displaceable, or the second axis (6) is displaceable and can be moved in parallel between different positions,
and **in that**
an eccentric sleeve (12) is arranged on, preferably slid onto, the bearing dome (8), wherein the eccentric sleeve (12) has an inner casing (12a) adapted to the outer surface of the bearing dome (8) and has an outer casing (12b), which is formed eccentrically, at least in regions, relative to an inner casing axis, which coincides with the axis (8') of the bearing dome (8) in the state in which the eccentric sleeve is arranged on, preferably slid onto, the bearing dome (8), wherein the outer casing (12b) formed eccentrically in regions is formed in a circular manner in sections normal to the axis of the inner casing of the eccentric sleeve (12).

2. The headlamp according to claim 1, **characterised in that** the bearing dome (8) is mounted on the bearing element (7) and the bearing bore (9) is connected to the setting device (3).

3. The headlamp according to claim 2, **characterised in that** the bearing dome (8) is formed in one piece with the bearing element (7).

4. The headlamp according to claim 2 or 3, **characterised in that** the bearing bore (9) is mounted on a holder (10) for the setting device (3), preferably is formed integrally with the holder (10).

5. The headlamp according to any one of claims 1 to 4, **characterised in that** the bearing dome (8) is formed as a straight circular cylinder or as a straight truncated circular cone, preferably tapering in a direction away from the bearing element (7).

6. The headlamp according to any one of claims 1 to 5, **characterised in that** the setting device (3) is associated with at least one holding element (10a, 10b), which can be pivoted into at least one holding guide (7a, 7b), which is provided on the bearing element (7), such that, in the pivoted-in position of the setting device (3), the setting device (3) is secured against a movement along the second axis (6).

7. The headlamp according to claim 6, **characterised in that** the at least one holding element (10a, 10b) is arranged on the holder (10) for the setting device (3), preferably is formed integrally with this holder (10).

8. The headlamp according to claim 6 or 7, **characterised in that** the at least one holding guide (7a, 7b) is formed by means of at least one holding tab (7a', 7b') which is moulded on the bearing element (7), preferably is formed integrally with this bearing element (7).

9. The headlamp according to any one of claims 6 to 8, **characterised in that** at least one resetting element (11), for example a spring, such as a compression spring, is provided, which secures the setting device (3) against pivoting out from the pivoted-in position, in which the setting device (3) is secured against a movement in the direction of the second axis (6).

10. The headlamp according to claim 9, **characterised in that** the resetting element (11) is arranged on the bearing element (7), preferably is formed integrally therewith.

11. The headlamp according to any one of claims 1 to 10, **characterised in that** the second pivot axis (6) is fixed by the axis (8') of the bearing dome (8) or the bearing bore (9).

12. The headlamp according to any one of claims 1 to 11, **characterised in that** the bearing bore (9) has an inner casing, which is adapted to the outer casing (12b), running eccentrically at least in regions, of the bearing dome of the eccentric sleeve (12), such that the setting device (3) or the holder (10) for the setting device (3) is mounted pivotably on the outer casing (12b) of the eccentric sleeve (12).

13. The headlamp according to any one of claims 1 to 12, **characterised in that** the eccentric sleeve (12) can be fixed on the bearing dome (8) by means of a fastening means, preferably a fastening screw (13).

14. The headlamp according to claim 13, **characterised in that** the eccentric sleeve (12) and the bearing dome (8) have a corresponding engagement means, for example a toothing (12", 8"'), on contact faces (12', 8') facing towards one another.

15. The headlamp according to any one of claims 1 to 14, **characterised in that** the jointed connection (5) is provided in the form of a ball joint.

16. The headlamp according to any one of claims 1 to 15, **characterised in that** a first part of the jointed connection (5) is connected to the setting element (4) and a second part of the jointed connection (5) is connected to the optical assembly (1), and **in that** the two parts of the jointed connection (5) are preferably releasably connected to one another.

17. The headlamp according to claim 16, **characterised in that** the second part of the jointed connection (5) is formed at an end of a rocker arm (14), which rocker arm (14) is connected at its other end (15) to the optical assembly (1) for conjoint rotation.

## Revendications

1. Phare pour véhicules ayant un module optique (1), lequel module optique (1) est monté sur un élément de palier (7) en étant apte à pivoter autour d'un premier axe (2), lequel élément de palier (7) porte un dispositif de réglage (3) espacé du premier axe (2), lequel dispositif de réglage (3) présente un élément de réglage (4) réglable en translation et couplé au module optique (1), et dans lequel une liaison articulée (5) existe entre le dispositif de réglage (3) et le module optique (1), et dans lequel le dispositif de réglage (3) est monté sur l'élément de palier (7) en étant apte à pivoter autour d'un second axe (6) et le second axe (6) s'étend parallèlement au premier axe (2), dans lequel est prévu sur l'élément de palier (7) une portée de palier (8) ou un alésage de palier, sur lequel le dispositif de réglage (3) avec une portée de palier correspondante ou avec un alésage de palier (9) correspondant est monté en étant apte à pivoter autour du second axe (6),
**caractérisé par le fait que**
le second axe (6) est réglable, ou le second axe (6) est réglable et déplaçable parallèlement entre des positions différentes,
**et que**
une douille à excentrique (12) est disposée, de préférence est enfilée, sur la portée de palier (8), la douille à excentrique (12) présentant une enveloppe interne (12a) adaptée sur la surface d'enveloppe de la portée de palier (8) ainsi qu'une enveloppe externe (12b) réalisée au moins par endroits excentrique par rapport à un axe d'enveloppe interne, lequel coïncide avec l'axe (8') de la portée de palier (8) à l'état disposé, de préférence enfilé, sur la portée de palier (8), l'enveloppe externe (12b) réalisée par endroits excentrique étant réalisée de façon circulaire dans des coupes perpendiculairement à l'axe de l'enveloppe interne de la douille à excentrique (12).

2. Phare selon la revendication 1, **caractérisé par le fait que** la portée de palier (8) est fixée à l'élément de palier (7) et l'alésage de palier (9) est relié au dispositif de réglage (3).

3. Phare selon la revendication 2, **caractérisé par le fait que** la portée de palier (8) est réalisée d'un seul tenant avec l'élément de palier (7).

4. Phare selon l'une des revendications 2 ou 3, **caractérisé par le fait que** l'alésage de palier (9) est fixé à un support (10) pour le dispositif de réglage (3), de préférence réalisé d'un seul tenant avec le support (10) .

5. Phare selon l'une des revendications 1 à 4, **caractérisé par le fait que** la portée de palier (8) est réalisée en tant que cylindre droit à section circulaire ou en tant que tronc de cône droit à section circulaire, de préférence se rétrécissant dans la direction opposée à l'élément de palier (7).

6. Phare selon l'une des revendications 1 à 5, **caractérisé par le fait que** le dispositif de réglage (3) est associé à au moins un élément de support (10a, 10b), lequel est apte à entrer par pivotement dans au moins un guidage de maintien (7a, 7b), lequel est prévu sur l'élément de palier (7), de telle sorte qu'en position introduite par pivotement du dispositif de réglage (3), le dispositif de réglage (3) est empêché de de déplacer le long du second axe (6).

7. Phare selon la revendication 6, **caractérisé par le fait que** le au moins un élément de support (10a, 10b) est disposé sur le support (10) pour le dispositif de réglage (3), de préférence réalisé d'un seul tenant avec ce support (10).

8. Phare selon l'une des revendications 6 ou 7, **caractérisé par le fait que** le au moins un guidage de support (7a, 7b) est formé au moyen d'au moins une patte de maintien (7a', 7b') formée sur l'élément de palier (7), de préférence réalisée d'un seul tenant avec cet élément de palier (7).

9. Phare selon l'une des revendications 6 à 8, **caractérisé par le fait qu'**au moins un élément de rappel (11), par exemple un ressort, tel qu'un ressort de compression, est prévu, lequel empêche le dispositif de réglage (3) de pivoter à l'extérieur depuis la position introduite par pivotement, dans laquelle le dispositif de réglage (3) est empêché de se déplacer dans la direction du second axe (6).

10. Phare selon la revendication 9, **caractérisé par le fait que** l'élément de rappel (11) est disposé sur l'élément de palier (7), de préférence réalisé d'un seul tenant avec celui-ci.

11. Phare selon l'une des revendications 1 à 10, **caractérisé par le fait que** le second axe de pivotement (6) est établi par l'axe (8') de la portée de palier (8) ou de l'alésage de palier (9).

12. Phare selon l'une des revendications 1 à 11, **caractérisé par le fait que** l'alésage de palier (9) présente une enveloppe interne, laquelle est adaptée à l'enveloppe externe (12b) de la portée de palier de la douille à excentrique (12), s'étendant au moins par endroits de façon excentrique, de telle sorte que le dispositif de réglage (3) ou le support (10) pour le dispositif de réglage (3) est monté apte à pivoter sur l'enveloppe externe (12b) de la douille à excentrique (12).

13. Phare selon l'une des revendications 1 à 12, **caractérisé par le fait que** la douille à excentrique (12) est apte à être fixée sur la portée de palier (8) par un moyen de fixation, de préférence une vis de fixation (13).

14. Phare selon la revendication 13, **caractérisé par le fait que** la douille à excentrique (12) et la portée de palier (8) présentent un dispositif d'encliquetage correspondant, par exemple une denture (12", 8"') sur des faces de contact (12', 8') tournées l'une vers l'autre.

15. Phare selon l'une des revendications 1 à 14, **caractérisé par le fait que** la liaison articulée (5) est réalisée sous forme d'une articulation à rotule.

16. Phare selon l'une des revendications 1 à 15, **caractérisé par le fait qu'**une première partie de la liaison articulée (5) est reliée à l'élément de réglage (4) et une seconde partie de la liaison articulée (5) est en liaison avec le module optique (1), et que les deux parties de la liaison articulée (5) sont reliées l'une à l'autre de préférence de manière amovible.

17. Phare selon la revendication 16, **caractérisé par le fait que** la seconde partie de la liaison articulée (5) est formée à une extrémité d'un levier de renvoi (14), lequel levier de renvoi (14) est relié à son autre extrémité (15) de façon solidaire en rotation avec le module optique (1).
